(19) Europäisches Patentamt
European Patent Office
Office européen des brevets

(11) **EP 1 695 884 B1**

(12) **EUROPÄISCHE PATENTSCHRIFT**

(45) Veröffentlichungstag und Bekanntmachung des Hinweises auf die Patenterteilung:
**15.04.2009   Patentblatt 2009/16**

(51) Int Cl.:
**B60T 8/172** *(2006.01)*     **G01G 19/08** *(2006.01)*

(21) Anmeldenummer: **06001679.7**

(22) Anmeldetag: **27.01.2006**

(54) **Verfahren zur einfachen Berechnung der Fahrzeugmasse während einer Zustandsänderung**

Method and device for determining the mass of a motor vehicle during a state transition thereof

Procédé et dispositif pour la détermination de la masse d'un véhicule automobile pendant un changement d'état

(84) Benannte Vertragsstaaten:
**DE SE**

(30) Priorität: **28.02.2005   DE 102005008970**

(43) Veröffentlichungstag der Anmeldung:
**30.08.2006   Patentblatt 2006/35**

(73) Patentinhaber: **ZF FRIEDRICHSHAFEN Aktiengesellschaft**
**88038 Friedrichshafen (DE)**

(72) Erfinder:
• **Reisch, Bernhard**
 **88316 Isny (DE)**
• **Schmidtner, Peter**
 **88131 Lindau (DE)**

(56) Entgegenhaltungen:
 **EP-A- 0 937 619     DE-A1- 10 307 510**
 **US-A- 6 144 928**

**Beschreibung**

Die Erfindung betrifft ein Verfahren zur Berechnung der Masse eines Fahrzeugs gemäß dem Oberbegriff der Patentansprüche 1 und 3 sowie ein System zur Berechnung der Fahrzeugmasse gemäß dem Oberbegriff der Patentansprüche 2 und 11.

Bei den heutigen Steuerungs- und Regelungssystemen für einen Fahrzeugantriebsstrang (Motor, Getriebe, Bremssysteme) wird die aktuelle Fahrzeugmasse nicht selten als Parameter zur Optimierung des Fahrzeugbetriebs verwendet. Gerade im Nutzfahrzeugbereich variiert die Fahrzeugmasse in Abhängigkeit vom Beladezustand vergleichsweise stark, so dass ein beladenes Fahrzeug beispielsweise eine Masse von vierzig Tonnen und ein unbeladenes Fahrzeug eine Masse von sechs Tonnen aufweisen kann. Diese Masseunterschiede wirken sich merkbar auf das Betriebsverhalten des Fahrzeugs aus, welches beispielsweise durch das Übersetzungsänderungsverhalten des Getriebes, die Wirkung einer Niveauregelungseinrichtung, die Wirkung einer Fahrgeschwindigkeitregelungsvorrichtung, die Bremswirkung der Betriebsbremse des Fahrzeugs einschließlich einer verschleißlosen Bremse (Retarder) sowie durch die Fahrstabilitätseigenschaften des Fahrzeugs gekennzeichnet ist.

Um nun diese Betriebseigenschaften eines solchen Fahrzeuges verbessern zu können, ist zunächst die aktuelle Fahrzeugmasse zu bestimmen. Heutige Steuerungs- und Regelungssysteme nutzen verschiedene Möglichkeiten zur Bestimmung der Fahrzeugmasse. So kann die Fahrzeugmasse mittels Sensoren gemessen werden (z.B. über die Auflagekraft eines Aufliegers auf einer Zugmaschine und anschließende Hochrechnung auf die Fahrzeugmasse), oder durch komplexe Berechnungsalgorithmen, die eine Vielzahl von Informationen, wie diverse Antriebs- und Bremsmomente, Fahrwiderstand, Fahrzeugkenngrößen, Kupplungszustände usw. benötigen, bestimmt werden.

Nachteilig bei den bekannten Messvorrichtungen und diesbezüglichen Berechnungsverfahren ist ein vergleichsweise großer Aufwand an Sensorik, Verkabelung und Berechnungskapazität in einem diesbezüglichen Berechnungsmittel wie einem Mikrocomputer. Zudem ist zu berücksichtigen, dass ein hoher apparativer Aufwand auch die Störanfälligkeit einer solchen Einrichtung ansteigen lässt.

Wenn zudem oder in Alleinstellung komplexe Berechnungsalgorithmen verwendet werden, so sind dazu eine Vielzahl von Informationen erforderlich. Bei Wegfall oder Falschbestimmung einer dieser Informationen ist der Algorithmus unter Umständen derart gestört, dass das Berechnungsergebnis fehlerhaft ist und nicht verwendet werden kann. Außerdem sollen diese Informationen zur Bestimmung der Fahrzeugmasse üblicherweise an vielen Stellen im Fahrzeug verfügbar sein, so dass das Fahrzeug über einen Datenbus verfügen muss, an dem alle erforderlichen Steuerungsvorrichtungen für beispielsweise den Motor, das Getriebe und den Retarder angeschlossen sind. Diese Steuerungsvorrichtungen müssen gegebenenfalls auch die zur Fahrzeugmassebestimmung notwendigen Informationen über den Datenbus zur Verfügung stellen. Alternativ können einzelne Informationen durch die Kenntnis von Fahrzeugparametern, wie Achsübersetzungen, und Reifendurchmesser selbst berechnet werden. Dies erfordert jedoch eine Konfiguration auf das jeweilige Fahrzeug.

Die DE 198 37 380 A1 offenbart ein Verfahren und eine Einrichtung zur Ermittlung der Masse eines Fahrzeugs. Diese Massebestimmung geschieht mittels zwei zeitlich versetzter Messungen innerhalb eines Messzeitraumes, durch welche mindestens eine Zugkraft-Größe und mindestens eine Bewegungs-Größe des Fahrzeugs ermittelt werden, wobei eine der beiden Messungen während einer zugkraftfreien, und die andere der beiden Messungen während einer Zugkraft-Phase erfolgen. Dabei umfassen die beiden Messungen jeweils einen Datenerfassungszeitraum, dessen Dauer größer als eine Mindestdauer ist.

Nachteilig hieran ist, dass die der Berechnung zugrunde liegende Gleichung insgesamt vier Geschwindigkeiten, nämlich zwei Geschwindigkeiten des Fahrzeugs zu Beginn und am Ende der Zugkraft-Phase und zwei Geschwindigkeiten zu Beginn und am Ende der zugkraftfreien Phase nutzt. Diese Geschwindigkeiten müssen zudem sehr exakt erfasst werden, da nur geringe Abweichungen der Differenzen benachbarter Geschwindigkeitswerte zu hohen Messergebnisfehlern führen.

Es ist ferner nachteilig, dass eine zugkraftfreie Phase zur Berechnung erforderlich ist, beispielsweise ein Gangwechsel, welches die Häufigkeit der möglichen Berechnungen reduziert. Zudem ist die der Berechnung zugrundeliegende Gleichung sehr komplex, wodurch ein hoher Ressourcenverbrauch in einer diesbezüglichen Berechnungsrichtung entsteht. Somit ist dieses bekannte Fahrzeugmasseermittlungsverfahren und die dazugehörige Einrichtung tendenziell fehleranfällig und zudem teuer in der Herstellung.

Vor diesem Hintergrund liegt der Erfindung die Aufgabe zugrunde, durch ein einfaches Verfahren und ein System bzw. eine Vorrichtung es zu ermöglichen, die aktuelle Fahrzeugmasse für den Fahrzeugbetrieb ausreichend genau zu ermitteln, und dabei den Umfang der vor allem messtechnisch zu ermittelnden Informationen so gering wie möglich zu halten.

Die DE 10 307 510 offenbart ein Verfahren und eine Einrichtung zur Ermittlung der Masse eines mit einem Retarder ausgestalteten Fahrzeuges, gemäß den Oberbegriffen der unabhängigen Ansprüche 1, 3, 9, 11.

Die Lösung dieser Aufgabe ergibt sich aus den Merkmalen der Patentansprüche 1, 3, 9 und 11, während vorteilhafte Ausgestaltungen und Weiterbildungen der Erfindung den Unteransprüchen entnehmbar sind.

Der Erfindung liegt die Erkenntnis zugrunde; dass sich ein einfaches Verfahren in einer ersten Ausführungsform zur Berechnung der Masse eines Fahrzeugs, welches einen Retarder enthält, realisieren lässt, wenn die Berechnung während einer zwischen einem ersten und einem zweiten Zeitpunkt stattfindenden Zustandsänderung des Fahrzeugs berechnet wird, wobei dass Verfahren die folgenden Schritte enthält:

- Erfassen einer Drehzahl des Retarders in einem ersten und in einem zweiten Zeitpunkt,
- Bilden der zeitlichen Ableitung der beiden erfassten Retarderdrehzahlen,
- Erfassen eines Bremsmoments des Retarders in einem ersten und in einem zweiten Zeitpunkt,
- Bestimmen einer Fahrzeugkonfiguration aus den Werten einer Hinterachsübersetzung und eines dynamischen Reifenradius des Fahrzeugs und
- Berechnen der Fahrzeugmasse durch die Gleichung:

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

Somit kann lediglich mit Kenntnis der Hinterachsübersetzung $i_{HA}$ und des dynamischen Reifenradius $r_{dyn}$, sowie der in den Zeitpunkten $t_1$ und $t_2$ erfassten Retarderbremsmomente $M_{Ret1}$, $M_{Ret2}$ und Retarderdrehzahlen $n_{Ret}$, bzw. deren Ableitung $\dot{n}_{Ret1}$, $\dot{n}_{Ret2}$ nach der Zeit, die Fahrzeugmasse $m_{Frzg}$ sehr einfach und zuverlässig berechnet werden. Es ist dabei sehr vorteilhaft, dass zur Bestimmung der aktuellen Fahrzeugmasse $m_{Frzg}$ keine Kenntnis über weitere Fahrzeugbetriebsdaten notwenig ist.

Sind bei einer Fahrzeugbaureihe die Unterschiede in der Triebstrangkonfiguration zwischen den einzelnen Fahrzeugen nur gering, und ist ferner der Anspruch an die Genauigkeit der zu bestimmenden Fahrzeugmasse nicht sehr hoch, so kann eine gemittelte Fahrzeugkonfiguration ($i_{HA}$, $r_{dyn}$) für alle Fahrzeuge eines Fahrzeugtyps als konstante Größe fest vorgegeben werden. In diesem Fall sind lediglich das Retarderbremsmoment und die Retarderdrehzahl für die Berechnung der Fahrzeugmasse zu messen, wobei beide Werte stets in einer Retardersteuerungsvorrichtung vorhanden sind. Somit ist kein zusätzlicher Aufwand bezüglich einer Installation von zusätzlichen Erfassungssensoren erforderlich, wodurch eine erhebliche Kosteneinsparung gegenüber bekannten Systemen zur Fahrzeugmassebestimmung erzielt wird.

Außerdem werden keine besonderen Signale benötigt, welches die Berechnungskapazität der gesamten Bordelektronik entlastet. Auch ist der Ressourcenverbrauch (RAM, ROM, Berechnungszeit) in der Vorrichtung zur Berechnung der Fahrzeugmasse insgesamt sehr gering, da die Berechnungsformel selber wenig komplex ist. Ein wesentlicher Vorteil besteht weiterhin darin, dass die Ausfallsicherheit sehr groß ist.

Der Erfindung liegt ebenfalls die Erkenntnis zugrunde, dass sich ein einfaches Verfahren in einer zweiten Ausführungsform zur Berechnung der Masse eines Fahrzeugs, welches einen Retarder enthält, realisieren lässt, wenn die Berechnung während einer zwischen einem ersten und zweiten Zeitpunkt stattfindenden Zustandsänderung des Fahrzeugs berechnet wird, wobei das Verfahren die Schritte enthält:

- Erfassen einer Drehzahl des Retarders im ersten Zeitpunkt und im zweiten Zeitpunkt,
- Bilden der zeitlichen Ableitung der beiden erfassten Retarderdrehzahlen,
- Erfassen eines Bremsmoments des Retarders im ersten und im zweiten Zeitpunkt,
- Erfassen einer Fahrzeuggeschwindigkeit und
- Berechnen der Fahrzeugmasse durch die Gleichung:

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

Hierbei ist zur Berechnung der Fahrzeugmasse $m_{Frzg}$ die Kenntnis der Fahrzeuggeschwindigkeit $v_{Frzg}$ als zusätzlicher Betriebsparameter notwendig, während die Kenntnis der Hinterachsübersetzung und des dynamischen Reifenradius unbeachtet bleiben kann.

Vorzugsweise werden die Verfahrensschritte zur Berechnung der Fahrzeugmasse $m_{Frzg}$ mehrfach durchgeführt, und es wird eine gemittelte Fahrzeugmasse durch Mittelwertbildung der berechneten Fahrzeugmassen bestimmt.

Es wirkt sich dabei als sehr vorteilhaft aus, dass durch Mittelung von mehreren Einzelberechnungsergebnissen der Fahrzeugmasse die Erzielung eines insgesamt sehr genauen Gesamtberechnungsergebnisses möglich ist. In einer vorteilhaften Ausführungsform der Erfindung können dazu beispielsweise zehn Messergebnisse in einer Akkumulationsvorrichtung aufsummiert werden und anschließend die akkumulierte Summe durch zehn geteilt. Somit können fehlerhafte Berechnungsergebnisse, welche aus Messergebnissen resultieren, welche unter ungünstigen Betriebsbedingungen des Fahrzeugs aufgenommen wurden, beispielsweise bei Fahrten auf stark geneigter Ebene oder bei Kurvenfahrten, ausgeglichen werden. Da durch Aufnahme und Mittelung von mehreren Messergebnissen eine größere Betriebsbandbreite abgedeckt wird, können eventuell auftretende Messwertausreißer eliminiert werden.

Vorzugsweise werden Berechnungen der Fahrzeugmasse selektiert, die mittels erfasster Werte berechnet wurden, welche unter vorbestimmten Randbedingungen erfasst wurden.

Durch diese Selektion von einzelnen Berechnungen, die unter besonders günstigen Randbedingungen durchgeführt wurden, ist eine noch genauere Berechnung der Fahrzeugmasse möglich. Vorzugsweise enthalten die vorbestimmten Randbedingungen große Änderungen des Bremsmoments.

Indem die Randbedingungen derart festgelegt werden, dass insbesondere große Änderungen des Bremsmoments als Erfassungsparameter verwendet werden, wird eine weiter verfeinerte Berechnung der Fahrzeugmasse ermöglicht, da die sich innerhalb einer kurzen Zeitspanne einstellende Differenz der Bremsmomente sehr groß ist.

Vorzugsweise werden die vorbestimmten Randbedingungen zu Zeitpunkten des Ein- oder Ausschaltens des Retarders festgelegt. Zu diesen Zeitpunkten ist die Änderung des Bremsmoments sehr groß, welches ebenfalls zu einem vergleichsweise genauen Berechnungsergebnis führt.

Ein System bzw. eine Vorrichtung zur Berechnung der Masse eines Fahrzeugs mit einem Retarder enthält in einer ersten Ausführungsform vorzugsweise ein Sensormittel zum Erfassen einer Drehzahl des Retarders in einem ersten und in einem zweiten Zeitpunkt, ein Sensormittel zum Erfassen eines Bremsmoments des Retarders im ersten und im zweiten Zeitpunkt, ein Bestimmungsmittel zum Bestimmen einer Fahrzeugkonfiguration aus den Werten einer Hinterachsübersetzung und eines dynamischen Reifenradius des Fahrzeugs sowie ein Berechnungsmittel zum Berechnen der Fahrzeugmasse durch die Gleichung:

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

In einer weiteren vorteilhaften Ausgestaltung verfügt ein System zur Berechnung der Masse $m_{Frzg}$ eines Fahrzeugs, welches einen Retarder enthält, über ein Sensormittel zum Erfassen einer Drehzahl des Retarders im ersten und im zweiten Zeitpunkt, ein Sensormittel zum Erfassen eines Bremsmoments des Retarders im ersten und im zweiten Zeitpunkt, ein Sensormittel zum Erfassen einer Fahrzeuggeschwindigkeit, sowie ein Berechnungsmittel zum Berechnen der Fahrzeugmasse durch die folgende Gleichung:

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

Vorzugsweise enthält das System zur Berechnung der Masse $m_{Frzg}$ eines Fahrzeugs ein Berechnungsmittel zum Berechnen einer gemittelten Fahrzeugmasse, mit einem Eingangsanschluss, an welchen eine Mehrzahl von berechneten Fahrzeugmassewerten eingegeben werden kann, und einem Ausgangsanschluss, an welchem ein gemittelter Fahrzeugmassewert ausgebbar ist.

Die Erfindung lässt sich anhand eines Ausführungsbeispiels weiter erläutern. Dazu ist der Beschreibung eine Zeichnung beigefügt.

Diese zeigt in

Fig. 1    einen zeitlichen Ablauf eines Datenerfassungszeitraums des erfindungsgemäßen Verfahrens,
Fig. 2    ein System zur Berechnung einer Fahrzeugmasse in einer ersten Ausführungsform und
Fig. 3    ein System zur Berechnung einer Fahrzeugmasse in einer zweiten Ausführungsform.

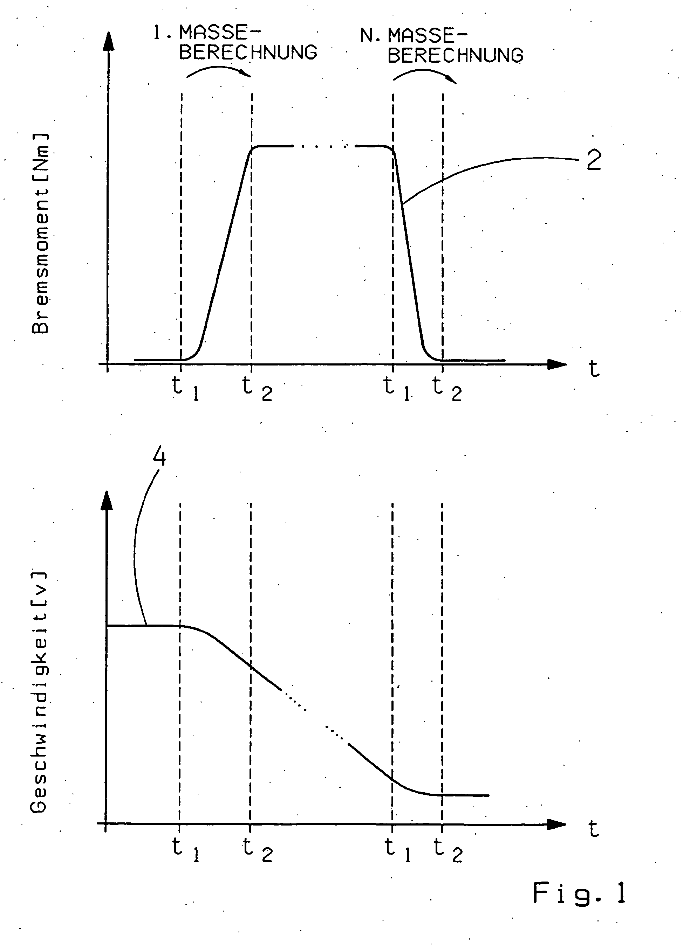

In Fig. 1 ist mit 2 der Graph des Retarderbremsmoments und mit 4 der Graph der Fahrzeuggeschwindigkeit innerhalb von mehreren Messzeiträumen dargestellt, von denen hier der Messzeitraum der ersten Masseberechnung der n-ten Masseberechnung gezeigt ist, und die Messzeiträume jeweils durch einen Anfangszeitpunkt $t_1$ und Endzeitpunkt

$t_2$ begrenzt sind. Zwischen den beiden gezeigten Messzeiträumen können beliebig viele entsprechende Masseberechnungen vorliegen, wobei der Einschaltzeitraum und der Ausschaltzeitraum des Retarders zur Masseberechnung aber besonders vorteilhaft sind. Das ausgeübte Retarderbremsmoment 2 führt zu einer Verringerung der Fahrzeuggeschwindigkeit 4 bzw. $v_{Frzg}$ von $v_1$ am Anfang der Bremsung auf $v_2$ am Ende des. Bremsvorgangs.

Um herstellkostensparend und berechnungszeitreduzierend möglichst viele. Informationen von der Bestimmung der aktuellen Fahrzeugmasse auszuschließen, die normalerweise für eine Berechnung der Fahrzeugmasse benötigt werden, wird für das hier vorgeschlagene Verfahren vorausgesetzt, dass sich in einem kurzen Zeitintervall von beispielsweise zwei bis drei Sekunden die für die Fahrzeugmassebestimmung relevanten Randbedingungen am Fahrzeug nicht ändern. Dies bedeutet, dass sich ein Gefälle bzw. eine Steigung einer Straße nicht ändern darf. Femer darf sich auch die Fahrzeuggeschwindigkeit nicht (spürbar) ändern, die angreifenden Antriebs- und Bremsmomente sollten gleich bleiben und die Kupplung sollte nicht betätigt werden. In einem dermaßen definierten Zeitintervall verursacht jede Änderung des vom Retarder erzeugten Bremsmoments eine Veränderung der Fahrzeugbeschleunigung bzw. Fahrzeugverzögerung.

Mit den oben getroffenen Annahmen kann eine Gleichung für die an einem Fahrzeug wirkende Hangabtriebskraft

$$F_{Hang} = F_{Beschl} - F_{Brems}$$

mit den Summanden

$$F_{Brems} = M_{Ret} * \frac{i_{HA}}{r_{dyn}} \quad \text{und} \quad F_{Beschl} = m_{Frzg} * a_{Frzg}$$

aufgestellt sowie als ausreichend genau angenommen werden. Weitere angreifende Kräfte, wie z.B. der Luftwiderstand des Fahrzeugs, werden vemachlässigt. Hierbei bedeuten $F_{Hang}$ die Hangabtriebskraft, $F_{Beschl}$ die Beschleunigungskraft beziehungsweise Verzögerungskraft, $F_{Brems}$ die Bremskraft am Fahrzeugrad, $M_{Ret}$ das Bremsmoment des Retarders, $i_{HA}$ die Hinterachsübersetzung, $r_{dyn}$ der dynamischer Reifenradius, $m_{Frzg}$ die Fahrzeugmasse und $\alpha_{Frzg}$ die Fahrzeugbeschleunigung bzw. Fahrzeugverzögerung.

Durch die Annahme eines sehr kurzen Zeitintervalls (Zeitpunkt $t_1$ direkt vor der Änderung des Bremsmoments und Zeitpunkt $t_2$ direkt nach der Änderung des Bremsmoments) und damit $F_{Hang1} = F_{Hang2}$ (keine Änderung der Hangabtriebskraft) können daher die Gleichungen für $F_{Hang1}$ und $F_{Hang2}$ für beide Zeitpunkte aufgestellt, zusammengefasst und zur Fahrzeugmasse aufgelöst werden. Hieraus folgt:

$$m_{Frzg} = \frac{i_{HA}}{r_{dyn}} * \frac{M_{Ret2} - M_{Ret1}}{a_{Frzg2} - a_{Frzg1}}$$

Mit der Kenntnis der Hinterachsübersetzung $i_{HA}$ und des dynamischen Reifenradius $r_{dyn}$ kann anschließend aus den Bremsmomenten und den Fahrzeugbeschleunigungen bzw. Fahrzeugverzögerungen zu den Zeitpunkten $t_1$ und $t_2$ jeweils die Fahrzeugmasse $m_{Frzg}$ berechnet werden.

Da in Retardersteuergeräten das Retarderbremsmoment und die Retarderdrehzahl im Fahrzeugbetrieb ständig vorhanden sind, wird in der letzten Gleichung die Fahrzeugbeschleunigung vorteilhaft durch die zeitliche Änderung der Retarderdrehzahl ersetzt. Somit folgt mit der Gleichung für die positive oder negative Fahrzeugbeschleunigung

$$a_{Frzg} = \frac{\dot{n}_{Ret} * 2 * \pi * r_{dyn}}{60 * i_{HA}}$$

und für die Fahrzeugmasse $m_{Frzg}$ :

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

mit $n_{Ret}$ für die Retarderdrehzahl, $\dot{n}_{Ret1}$ und $\dot{n}_{Ret2}$ für die zeitliche Ableitung der Retarderdrehzahlen und $r_{dyn}$ für den dynamischen Reifenradius.

Falls die Fahrzeuggeschwindigkeit $v_{Frsg}$ verfügbar ist, kann auf die Hinterachsübersetzung und den Reifenradius verzichtet werden. Mit

$$\frac{i_{HA}}{r_{dyn}} = \frac{\pi * n_{Ret}}{30 * v_{Frzg}}$$

gilt somit:

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

Somit kann in Abhängigkeit vielerlei Begleit- und Betriebsumstände die jeweils vorteilhafte Gleichung zur Berechnung der aktuellen Fahrzeugmasse verwendet werden.

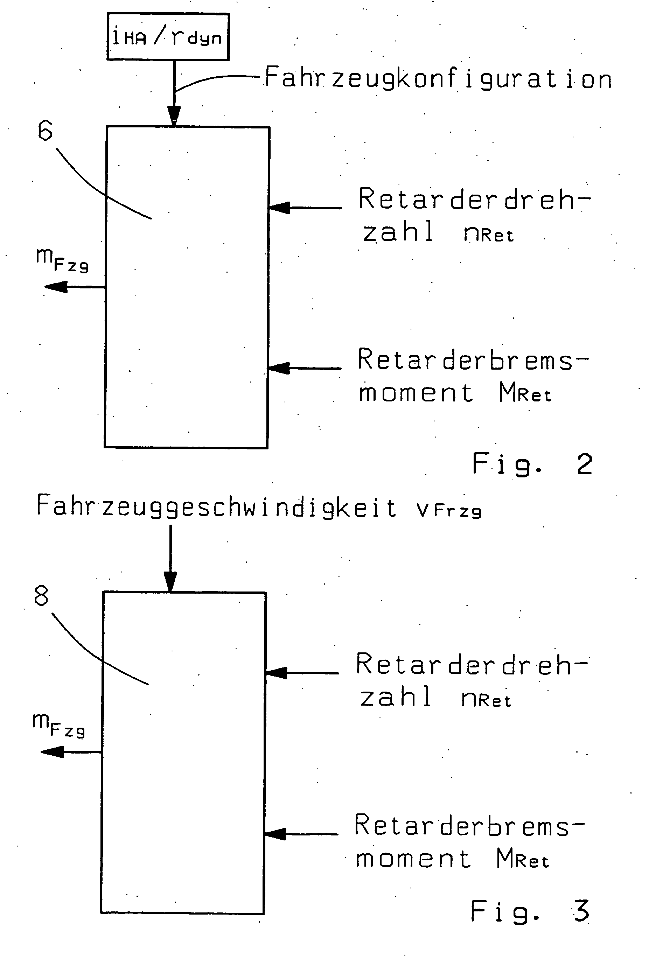

Fig. 2 zeigt schematisch ein elektronisches Berechnungssystem 6 zur Berechnung der aktuellen Fahrzeugmasse $m_{Frzg}$ gemäß einer ersten Ausführungsform der Erfindung. Zur Berechnung der Fahrzeugmasse benötigt das Berechnungssystem 6 ein Eingabesignal aus einem Sensormittel zum Erfassen der Retarderdrehzahl und ein Eingabesignal aus einem Sensormittel zum Erfassen des Retarderbremsmoments. Ferner benötigt dieses Berechnungssystem 6 Werte zum Bestimmen einer Fahrzeugkonfiguration, welche Informationen über die Hinterachsübersetzung $i_{HA}$ und den dynamischen Reifenradius $r_{dyn}$ des Fahrzeugs enthalten. Diese Werte können spezifisch für einen Fahrzeugtyp im Voraus bestimmt werden und in einem ROM- oder RAM-Speicherbereich oder in einer sonstigen Speichervorrichtung gespeichert vorliegen. Durch Ansprechen auf diese Eingabesignalwerte berechnet das Berechnungssystem anhand der Formel:

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

die Fahrzeugmasse $m_{Frzg}$ und gibt diese als gerade aktuellen Wert aus.

Fig. 3 zeigt ein Berechnungssystem 8 zum Berechnen der aktuellen Fahrzeugmasse $m_{Frzg}$ in einer zweiten Ausführungsform. Im Gegensatz zum Berechnungssystem 6 der in Fig. 2 gezeigten ersten Ausführungsform wird hier anstelle der Werte der Fahrzeugkonfiguration ein Eingabesignal eines Sensormittels zum Erfassen der Fahrzeuggeschwindigkeit eingegeben. Durch Ansprechen auf die insgesamt eingegebenen Eingabesignale berechnet dieses Berechnungssystem mittels der Gleichung:

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

die Fahrzeugmasse $m_{Frzg}$ und gibt diese als aktuellen Wert aus.

Bezugszeichen

2     zeitlicher Verlauf eines Retarderbremsmoments,
4     zeitlicher Verlauf einer Fahrzeuggeschwindigkeit,
6     Berechnungssystem in einer ersten Ausführungsform
8     Berechnungssystem in einer zweiten Ausführungsform

$a_{Frzg}$     Fahrzeugbeschleunigung / Fahrzeugverzögerung
$F_{Hang}$     Hangabtriebskraft
$F_{Beschl}$     Beschleunigungs- oder Verzögerungskraft
$F_{Brems}$     Bremskraft am Rad
$i_{HA}$     Hinterachsübersetzung
$M_{Ret}$     Bremsmoment des Retarders
$M_{Frzg}$     Fahrzeugmasse
$n_{Ret}$     Retarderdrehzahl
$r_{dyn}$     dynamischer Reifenradius
$t_0$     Zeitpunkt
$t_1$     Anfangszeitpunkt einer Messung
$t_2$     Endzeitpunkt einer Messung
$t_3$     Zeitpunkt
$v$, $v_{Frzg}$     Fahrzeuggeschwindigkeit

**Patentansprüche**

**1.** Verfahren zur Berechnung der Masse ($m_{Frzg}$) eines Fahrzeugs, welches einen Retarder enthält, während einer zwischen einem ersten Zeitpunkt ($t_1$) und einem zweiten Zeitpunkt ($t_2$) stattfindenden Zustandsänderung des Fahrzeugs, wobei das Verfahren durch die folgenden Schritte **gekennzeichnet** ist:

   - Erfassen einer Drehzahl ($n_{Ret1}$) des Retarders im ersten Zeitpunkt ($t_1$) und einer zweiten Drehzahl ($n_{Ret2}$) in einem zweiten Zeitpunkt ($t_2$),
   - Bilden der zeitlichen Ableitung ($\dot{n}_{Ret1}$, $\dot{n}_{Ret2}$) der beiden erfassten Retarderdrehzahlen ($n_{Ret1}$, $n_{Ret2}$),
   - Erfassen eines ersten Bremsmoments ($M_{Ret1}$) des Retarders im ersten Zeitpunkt ($t_1$) und eines zweiten Bremsmomentes ($M_{Ret2}$) im zweiten Zeitpunkt ($t_2$),
   - Bestimmen einer Fahrzeugkonfiguration aus den Werten einer Hinterachsübersetzung ($i_{HA}$) und eines dynamischen Reifenradius ($r_{dyn}$) des Fahrzeugs und
   - Berechnen der Fahrzeugmasse ($m_{Frzg}$).

**2.** Verfahren zur Berechnung der Masse ($m_{Frzg}$) eines Fahrzeugs nach Anspruch 1, **dadurch gekennzeichnet, dass** die Fahrzeugmasse ($m_{Frzg}$) durch die Gleichung

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

berechnet wird.

**3.** Verfahren zur Berechnung der Masse ($m_{Frzg}$) eines Fahrzeugs, welches einen Retarder enthält, während einer zwischen einem ersten Zeitpunkt ($t_1$) und einem zweiten Zeitpunkt ($t_2$) stattfindenden Zustandsänderung des Fahrzeugs, wobei das Verfahren durch die folgenden Schritte **gekennzeichnet** ist:

   - Erfassen einer Drehzahl ($n_{Ret1}$) des Retarders im ersten Zeitpunkt ($t_1$) und einer zweiten Drehzahl ($n_{Ret2}$) in

einem zweiten Zeitpunkt ($t_2$),
- Bilden der zeitlichen Ableitung ($\dot{n}_{Ret1}$, $\dot{n}_{Ret2}$) der beiden erfassten Retarderdrehzahlen ($n_{Ret1}$, $n_{Ret2}$),
- Erfassen eines Bremsmoments ($M_{Ret1}$) des Retarders im ersten Zeitpunkt ($t_1$) und eines zweiten Bremsmoments ($M_{Ret2}$) im zweiten Zeitpunkt ($t_2$),
- Erfassen einer Fahrzeuggeschwindigkeit ($v_{Frzg}$) und
- Berechnen der Fahrzeugmasse ($m_{Frzg}$).

4. Verfahren zur Berechnung der Masse ($m_{Frzg}$) eines Fahrzeugs nach Anspruch 3, **dadurch gekennzeichnet, dass** die Fahrzeugmasse ($m_{Frzg}$) durch die Gleichung

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

berechnet wird.

5. Verfahren nach einem der Ansprüche 1 bis 4, **dadurch gekennzeichnet, dass** die Verfahrensschritte zur Berechnung der Fahrzeugmasse ($m_{Frzg}$) mehrfach nacheinander durchgeführt werden, und dass eine gemittelte Fahrzeugmasse durch Mittelwertbildung von Einzelwerten der Fahrzeugmasse berechnet wird.

6. Verfahren nach einem der vorhergehenden Ansprüche, **dadurch gekennzeichnet, dass** Berechnungsergebnisse der Fahrzeugmasse ($m_{Frzg}$) selektiert werden, die mittels erfasster Werte berechnet wurden, welche unter vorbestimmten Randbedingungen erfasst wurden.

7. Verfahren nach Anspruch 6, **dadurch gekennzeichnet, dass** die vorbestimmten Randbedingungen große Änderungen des Bremsmoments enthalten.

8. Verfahren nach einem der Ansprüche 6 oder 7, **dadurch gekennzeichnet, dass** die vorbestimmten Randbedingungen Zeitpunkte des Ein- oder Ausschaltens des Retarders umfassen.

9. System zur Berechnung der Masse ($m_{Frzg}$) eines Fahrzeugs, welches einen Retarder enthält, während einer zwischen einem ersten und zweiten Zeitpunkt ($t_1$, $t_2$) stattfindenden Zustandsänderung des Fahrzeugs, wobei das System **gekennzeichnet ist durch**:

- ein Sensormittel zum Erfassen einer Drehzahl ($n_{Ret1}$) des Retarders im ersten Zeitpunkt ($t_1$) und einer zweiten Drehzahl ($n_{Ret2}$) in einem zweiten Zeitpunkt ($t_2$),
- ein Sensormittel zum Erfassen eines ersten Bremsmoments ($M_{Ret1}$) des Retarders im ersten Zeitpunkt ($t_1$) und eines zweiten Bremsmoments ($M_{Ret2}$) im zweiten Zeitpunkt ($t_2$),
- ein Bestimmungsmittel zum Bestimmen einer Fahrzeugkonfiguration aus den Werten einer Hinterachsübersetzung ($i_{HA}$) und eines dynamischen Reifenradius ($r_{dyn}$) des Fahrzeugs und
- ein Berechnungsmittel zum Berechnen der Fahrzeugmasse ($m_{Frzg}$).

10. System zur Berechnung der Masse ($m_{Frzg}$) eines Fahrzeugs nach Anspruch 9, **dadurch gekennzeichnet, dass** es ein Berechnungsmittel zum Berechnen der Fahrzeugmasse ($m_{Frzg}$) durch die Gleichung

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

umfasst.

**11.** System zur Berechnung der Masse eines Fahrzeugs ($m_{Frzg}$), welches einen Retarder enthält, während einer zwischen einem ersten und zweiten Zeitpunkt ($t_1$, $t_2$) stattfindenden Zustandsänderung des Fahrzeugs, wobei das System **gekennzeichnet ist durch**:

    - ein Sensormittel zum Erfassen einer ersten Drehzahl ($n_{Ret1}$) des Retarders im ersten Zeitpunkt ($t_1$) und eine zweite Drehzahl ($n_{Ret2}$) in einem zweiten Zeitpunkt ($t_2$),
    - ein Sensormittel zum Erfassen eines ersten Bremsmoments ($M_{Ret1}$) des Retarders im dem ersten Zeitpunkt ($t_1$) und ein zweites Bremsmoment ($M_{Ret2}$) in dem zweiten Zeitpunkt ($t_2$),
    - ein Sensormittel zum Erfassen einer Fahrzeuggeschwindigkeit ($v_{Frzg}$) und
    - ein Berechnungsmittel zum Berechnen der Fahrzeugmasse ($m_{Frzg}$).

**12.** System zur Berechnung der Masse eines Fahrzeugs ($m_{Frzg}$) nach Anspruch 11, **dadurch gekennzeichnet, dass** es ein Berechnungsmittel zum Berechnen der Fahrzeugmasse ($m_{Frzg}$) durch die Gleichung

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

umfasst.

**13.** System nach einem der Ansprüche 9 bis 12, **dadurch gekennzeichnet, dass** ein Berechnungsmittel zum Berechnen einer gemittelten Fahrzeugmasse, mit einem Eingangsanschluss, an welchen eine Mehrzahl von berechneten Fahrzeugmassewerten eingegeben werden kann, und einem Ausgangsanschluss, an welchem der Wert einer gemittelte Fahrzeugmasse ausgebbar ist.

**Claims**

**1.** Method for calculating the mass ($m_{Frzg}$) of a vehicle, which includes a retarder, during a change in the state of the vehicle which takes place between a first instant ($t_1$) and a second instant ($t_2$), the method being **characterized by** the following steps:

    - acquiring a speed ($n_{Ret1}$) of the retarder at the first instant ($t_1$), and a second speed ($n_{Ret2}$) at a second instant ($t_2$),
    - forming the time derivative ($\dot{n}_{Ret1}$, $\dot{n}_{Ret2}$) of the two acquired retarder speeds ($n_{Ret1}$, $n_{Ret2}$),
    - acquiring a first braking torque ($M_{Ret1}$) of the retarder at the first instant ($t_1$), and a second braking torque ($M_{Ret2}$) at the second instant ($t_2$),
    - determining a vehicle configuration from the values of a rear-axle ratio ($i_{HA}$) and a dynamic tyre radius ($r_{dyn}$) of the vehicle, and
    - calculating the vehicle mass ($m_{Frzg}$).

**2.** Method for calculating the mass ($m_{Frzg}$) of a vehicle according to Claim 1, **characterized in that** the vehicle mass ($m_{Frzg}$) is calculated by the equation

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

**3.** Method for calculating the mass ($m_{Frzg}$) of a vehicle, which includes a retarder, during a change in the state of the vehicle which takes place between a first instant ($t_1$) and a second instant ($t_2$), the method being **characterized by** the following steps:

- acquiring a speed ($n_{Ret1}$) of the retarder at the first instant ($t_1$), and a second speed ($n_{Ret2}$) at a second instant ($t_2$),
- forming the time derivative ($\dot{n}_{Ret1}$, $\dot{n}_{Ret2}$) of the two acquired retarder speeds ($n_{Ret1}$, $n_{Ret2}$),
- acquiring a first braking torque ($M_{Ret1}$) of the retarder at the first instant ($t_1$), and a second braking torque ($M_{Ret2}$) at the second instant ($t_2$),
- acquiring a vehicle speed ($v_{Frzg}$) and
- calculating the vehicle mass ($m_{Frzg}$).

4. Method for calculating the mass ($m_{Frzg}$) of a vehicle according to Claim 3, **characterized in that** the vehicle mass ($m_{Frzg}$) is calculated by the equation

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

5. Method according to one of Claims 1 to 4, **characterized in that** the method steps for calculating the vehicle mass ($m_{Frzg}$) are carried out repeatedly one after another, and **in that** an averaged vehicle mass is calculated by forming the mean of individual values of the vehicle mass.

6. Method according to one of the preceding claims, **characterized in that** calculation results of the vehicle mass ($m_{Frzg}$) are selected which were calculated by means of acquired values which were acquired under predetermined boundary conditions.

7. Method according to Claim 6, **characterized in that** the predetermined boundary conditions include large changes in the braking torque.

8. Method according to either of Claims 6 and 7, **characterized in that** the predetermined boundary conditions comprise instants at which the retarder is switched on or off.

9. System for calculating the mass ($m_{Frzg}$) of a vehicle, which includes a retarder, during a change in the state of the vehicle which takes place between a first instant ($t_1$) and a second instant ($t_2$), the system being **characterized by**:

- a sensor means for acquiring a speed ($n_{Ret1}$) of the retarder at the first instant ($t_1$), and a second speed ($n_{Ret2}$) at a second instant ($t_2$),
- a sensor means for acquiring a first braking torque ($M_{Ret1}$) of the retarder at the first instant ($t_1$), and a second braking torque ($M_{Ret2}$) at the second instant ($t_2$),
- a determining means for determining a vehicle configuration from the values of a rear-axle ratio ($i_{HA}$) and a dynamic tyre radius ($r_{dyn}$) of the vehicle, and
- a calculating means for calculating the vehicle mass ($m_{Frzg}$).

10. System for calculating the mass ($m_{Frzg}$) of a vehicle according to Claim 9, **characterized in that** it comprises a calculating means for calculating the vehicle mass ($m_{Frzg}$) using the equation

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

11. System for calculating the mass of a vehicle ($m_{Frzg}$), which includes a retarder, during a change in the state of the vehicle which takes place between a first instant ($t_1$) and a second instant ($t_2$), the system being **characterized by**:

- a sensor means for acquiring a first speed ($n_{Ret1}$) of the retarder at the first instant ($t_1$), and a second speed ($n_{Ret2}$) at a second instant ($t_2$),

- a sensor means for acquiring a first braking torque ($M_{Ret1}$) of the retarder at the first instant ($t_1$), and a second braking torque ($M_{Ret2}$) at the second instant ($t_2$),
- a sensor means for acquiring a vehicle speed ($v_{Frzg}$) and
- a calculating means for calculating the vehicle mass ($m_{Frzg}$).

**12.** System for calculating the mass of a vehicle ($m_{Frzg}$) according to Claim 11, **characterized in that** it comprises a calculating means for calculating the vehicle mass ($m_{Frzg}$) using the equation

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

**13.** System according to one of Claims 9 to 12, **characterized by** a calculating means for calculating an averaged vehicle mass which has an input connection at which a plurality of calculated vehicle mass values can be input, and an output connection at which the value of an averaged vehicle mass can be output.

**Revendications**

**1.** Procédé de calcul de la masse ($m_{Frzg}$) d'un véhicule automobile contenant un ralentisseur pendant un changement d'état du véhicule automobile se produisant entre un premier instant ($t_1$) et un second instant ($t_2$), le procédé étant **caractérisé par** les étapes suivantes :

- détection d'une vitesse de rotation ($n_{Ret1}$) du ralentisseur au premier instant ($t_1$) et d'une seconde vitesse de rotation ($n_{Ret2}$) à un second instant ($t_2$) ;
- formation de la dérivée dans le temps ($\dot{n}_{Ret1}, \dot{n}_{Ret2}$) des deux vitesses de rotation de ralentisseur ($n_{Ret1}$, $n_{Ret2}$) détectées ;
- détection d'un premier couple de freinage ($M_{Ret1}$) du ralentisseur au premier instant ($t_1$) et d'un second couple de freinage ($M_{Ret2}$) au second instant ($t_2$) ;
- détermination d'une configuration de véhicule automobile à partir des valeurs d'une démultiplication d'essieu arrière ($i_{HA}$) et d'un rayon de pneu dynamique ($r_{dyn}$) du véhicule automobile ; et
- calcul de la masse du véhicule automobile ($m_{Frzg}$).

**2.** Procédé de calcul de la masse ($m_{Frzg}$) d'un véhicule automobile selon la revendication 1, **caractérisé en ce que** la masse du véhicule automobile ($m_{Frzg}$) est calculée par le biais de l'équation suivante :

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

**3.** Procédé de calcul de la masse ($m_{Frzg}$) d'un véhicule automobile contenant un ralentisseur pendant un changement d'état du véhicule automobile se produisant entre un premier instant ($t_1$) et un second instant ($t_2$), le procédé étant **caractérisé par** les étapes suivantes :

- détection d'une vitesse de rotation ($n_{Ret1}$) du ralentisseur au premier instant ($t_1$) et d'une seconde vitesse de rotation ($n_{Ret2}$) à un second instant ($t_2$) ;
- formation de la dérivée dans le temps ($\dot{n}_{Ret1}, \dot{n}_{Ret2}$) des deux vitesses de rotation de ralentisseur ($n_{Ret1}$, $n_{Ret2}$) détectées ;
- détection d'un premier couple de freinage ($M_{Ret1}$) du ralentisseur au premier instant ($t_1$) et d'un second couple de freinage ($M_{Ret2}$) au second instant ($t_2$) ;
- détection d'une vitesse du véhicule automobile ($v_{Frzg}$) ; et
- calcul de la masse du véhicule automobile ($m_{Frzg}$).

4. Procédé de calcul de la masse ($m_{Frzg}$) d'un véhicule automobile selon la revendication 3, **caractérisé en ce que** la masse du véhicule automobile ($m_{Frzg}$) est calculée par le biais de l'équation suivante :

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

5. Procédé selon l'une quelconque des revendications 1 à 4, **caractérisé en ce que** les étapes de calcul de la masse du véhicule automobile ($m_{Frzg}$) selon le procédé sont répétées à plusieurs reprises les unes après les autres et qu'une masse moyenne du véhicule automobile est calculée par formation d'une valeur moyenne à partir de valeurs individuelles de la masse du véhicule automobile.

6. Procédé selon l'une quelconque des revendications précédentes, **caractérisé en ce que** les résultats du calcul de la masse du véhicule automobile ($m_{Frzg}$) sélectionnés sont calculés à l'aide des données détectées dans des conditions limites prédéterminées.

7. Procédé selon la revendication 6, **caractérisé en ce que** les conditions limites prédéterminées contiennent de grandes variations de couple de freinage.

8. Procédé selon l'une quelconque des revendications 6 ou 7, **caractérisé en ce que** les conditions limites prédéterminées comprennent les instants de connexion ou de déconnexion du ralentisseur.

9. Système de calcul de la masse ($m_{Frzg}$) d'un véhicule automobile contenant un ralentisseur pendant un changement d'état du véhicule automobile se produisant entre un premier et un second instant ($t_1$, $t_2$), le système étant **caractérisé par** :

   - un moyen de détection destiné à détecter une vitesse de rotation ($n_{Ret1}$) du ralentisseur au premier instant ($t_1$) et une seconde vitesse de rotation ($n_{Ret2}$) à un second instant ($t_2$) ;
   - un moyen de détection destiné à détecter un premier couple de freinage ($M_{Ret1}$) du ralentisseur au premier instant ($t_1$) et un second couple de freinage ($M_{Ret2}$) à un second instant ($t_2$) ;
   - un moyen de détermination destiné à déterminer une configuration de véhicule automobile à partir des valeurs d'une démultiplication d'essieu arrière ($i_{HA}$) et d'un rayon de pneu dynamique ($r_{dyn}$) du véhicule automobile ; et
   - un moyen de calcul destiné à calculer la masse du véhicule automobile ($m_{Frzg}$).

10. Système de calcul de la masse ($m_{Frzg}$) d'un véhicule automobile selon la revendication 9, **caractérisé en ce qu'**un moyen de calcul destiné à calculer la masse du véhicule automobile ($m_{Frzg}$) comprend l'équation suivante :

$$m_{Frzg} = \frac{30 * i_{HA}^2}{\pi * r_{dyn}^2} * \frac{M_{Ret2} - M_{Ret1}}{\dot{n}_{Ret2} - \dot{n}_{Ret1}}$$

11. Système de calcul de la masse du véhicule automobile ($m_{Frzg}$) contenant un ralentisseur pendant un changement d'état du véhicule automobile se produisant entre un premier et un second instant ($t_1$, $t_2$), le système étant **caractérisé par** :

- un moyen de détection destiné à détecter une première vitesse de rotation ($n_{Ret1}$) du ralentisseur au premier instant ($t_1$) et une seconde vitesse de rotation ($n_{Ret2}$) à un second instant ($t_2$) ;
- un moyen de détection destiné à détecter un premier couple de freinage ($M_{Ret1}$) du ralentisseur au premier instant ($t_1$) et un second couple de freinage ($M_{Ret2}$) au second instant ($t_2$) ;
- un moyen de détection destiné à détecter une vitesse du véhicule automobile ($v_{Frzg}$) ; et
- un moyen de calcul destiné à calculer la masse du véhicule automobile ($m_{Frzg}$).

**12.** Système de calcul de la masse du véhicule automobile ($m_{Frzg}$) selon la revendication 11, **caractérisé en ce qu'**il comprend un moyen de calcul destiné à calculer la masse du véhicule automobile ($m_{Frzg}$) par le biais de l'équation suivante :

$$m_{Frzg} = \frac{\pi * n_{Ret}^2}{30 * v_{Frzg}^2} * \frac{M_{Ret2} - M_{Ret1}}{\dot{n}_{Ret2} - \dot{n}_{Ret1}}$$

**13.** Système selon l'une quelconque des revendications 9 à 12, **caractérisé en ce qu'**un moyen de calcul destiné à calculer une masse moyenne du véhicule automobile peut distribuer avec un raccord d'entrée une pluralité de valeurs de masse du véhicule automobile calculées et avec un raccord de sortie la valeur d'une masse moyenne du véhicule automobile.

1. MASSE-
BERECHNUNG

N. MASSE-
BERECHNUNG

Bremsmoment [Nm]

2

$t_1$   $t_2$   $t_1$   $t_2$   t

4

Geschwindigkeit [v]

$t_1$   $t_2$   $t_1$   $t_2$   t

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19837380 A1
- DE 10307510